# EUROPEAN PATENT APPLICATION

(11) **EP 3 143 899 A1**
(43) Date of publication of application: **22.03.2017**
(21) Application number: 15792743.5
(22) Date of filing: 11.05.2015
(51) Int. Cl.: A45C 5/04, A45C 5/14, A45C 13/16, A45C 13/38

(54) **CARRIER HAVING FOLDABLE WHEELS**

(30) Priority: 11.05.2014 KR 20140056060; 13.06.2014 KR 20140072173; 02.07.2014 KR 20140082424; 08.11.2014 KR 20140154838
(71) Applicant: Cho, Won-Sang, Asan-si, Chungcheongnam-do 336-010 (KR)
(72) Inventor: Cho, Won-Sang, Asan-si, Chungcheongnam-do 336-010 (KR)
(74) Representative: Cabinet Chaillot
(86) International application number: PCT/KR2015/004677
(87) International publication number: WO 2015/174699

(57) **Abstract**

The present invention relates to a carrier and, more particularly, to a device for rotating spiral rods in order to fold wheels of a carrier, the device comprising: a pair of spiral rods, each of which comprises one or more spiral lines; a cross bar comprising spiral line coupling portions coupled to the one or more spiral lines, respectively, the cross bar connecting the pair of spiral rods; and one or more elastic members for moving the cross bar in one direction.

## Description

### [Technical Field]

The present invention relates to a carrier, particularly, to a carrier having foldable wheels, and more particularly, to a device for rotating spiral rods for folding wheels of a carrier.

### [Background Art]

Carriers with wheels such as luggage may be conveniently used for various activities such as travelling or shopping. However, a carrier with small wheels is difficult to move over uneven road surfaces. Also, the bottom edges and corners of the luggage touch the ground and are worn down and become easily coated with dirt.

When wheels are large, the problems described above may be solved, but carriers are inconvenient for storage and aesthetically unpleasing. Accordingly, wheels of carriers should be slightly large and may be unfolded or folded as necessary. A carrier with folded wheels has been filed by the present applicant and registered Korean Patent Registration No. 10-1218439. The prior patent discloses a structure in which, since length of spiral rods is increased and the weight of the carrier accordingly increases due to the increased length, that much more force is needed when it is necessary to lift and move the carrier.

### [Disclosure of Invention]

### [Technical Problem]

The present invention provides a carrier having foldable wheels with light weight and increased durability.

Additional aspects of the present disclosure will be set forth in part in the description that follows and, in part, will be obvious from the description or may be learned by practice of the present disclosure.

### [Technical Solution]

One aspect of the present invention provides a device for rotating spiral rods for folding wheels of a carrier, including a pair of spiral rods each comprising one or more spiral lines, a cross bar which comprises spiral line coupling portions coupled with the spiral lines and connects the pair of spiral rods to each other, and one or more elastic members which move the cross bar in one direction.

The spiral lines may be formed as grooves and the spiral line coupling portions may be formed as pins in such a way that the spiral line coupling portions may be inserted in the corresponding spiral lines.

The spiral lines may protrude and the spiral line coupling portions may each include concave portions in such a way that the spiral lines may be inserted in the corresponding concave portions.

A wheel may be connected to and installed at each of the spiral rods.

The device may further include a body, and the pair of spiral rods, the cross bar, and the one or more elastic members may be installed at the body.

The body may be a bag, a suitcase, a trunk, or a golf bag.

The body and a loading plate may form an overall L shape or the loading plate may be folded to be close to the body.

One or more guide bars may intersect the cross bar and may stretch by a certain length in an upper direction or a lower direction.

The device may further include one or more handle bars separated from the cross bar rather than integrated therewith, and one or more handle bars may be installed to be vertically slidable.

When the one or more handle bars are allowed to slide from top to bottom, the one or more handle bars may come into contact with the cross bar and may push the cross bar downward. When the one or more handle bars are slid by a certain distance from bottom to top, the one or more handle bars are separated from the cross bar and distances between the cross bar and the one or more handle bars become greater.

A vertical movement distance of the cross bar may be shorter than vertical sliding distances of the one or more handle bars.

The one or more elastic members may move the cross bar upward.

The one or more elastic members may move the cross bar downward.

The one or more elastic members may be tension springs, and one side of each of the one or more elastic members may be connected to the cross bar and another side thereof may be connected to the body. Here, the device may further include one or more torsion springs, and one side of each of the one or more torsion springs may be connected to the spiral rods and another side thereof may be connected to the body. The one or more torsion springs may be positioned above the pair of spiral rods.

The one or more elastic members may be compression springs. Here, the one or more elastic members may be positioned in the one or more housings installed at the body. Here, the device may further include one or more torsion springs, and one side of each of the one or more torsion springs may be connected to the spiral rods and another side thereof may be connected to the body. The one or more torsion springs may be positioned above the pair of spiral rods.

The one or more elastic members may be torsion springs, and one side of each of the one or more torsion springs may be connected to the spiral rods and another side thereof may be connected to the body. The one or more torsion springs may be positioned above the pair of spiral rods.

When one or more handle bars and a traction bar are installed at the body, the traction bar and the cross bar are connected by a rope, and the one or more handle bars are allowed to slide downward, the one or more handle bars may push the traction bar downward in such a way that the rope may pass a direction change portion installed at the body and may pull the cross bar upward.

The spiral lines may each include an upper narrow section and a middle wide section.

A distance between a width of the upper narrow section and a width of the middle wide section may be 0.1 to 1 mm.

The spiral lines may each include an upper wide section and a middle narrow section.

A distance between a width of the upper wide section and a width of the middle narrow section may be 0.1 to 1 mm.

### [Advantageous Effects]

Since it is possible to shorten length of spiral rods, not only weight of a carrier may be reduced but also durability thereof may be increased.

Since it is possible to increase the diameter of the wheels, wheels may roll easily and smoothly even on a moderately uneven surfaces.

Since it is possible to fold the wheels, the carrier can be used and stored conveniently.

### [Brief Description of Drawings]

FIG. 1 is a schematic perspective view of a carrier according to the previously registered patent filed by the present applicant.
FIG. 2 is a schematic diagram illustrating an operational state of the carrier of FIG. 1.
FIG. 3 is a schematic perspective view of a carrier according to one embodiment of the present invention.
FIG. 4 is a schematic perspective view of spiral rods included in the carrier of FIG. 3 and wheels installed thereon by being connected thereto.
FIG. 5 is a schematic perspective view of cross bars applicable to the carrier of FIG. 3.
FIG. 6 is a schematic perspective view illustrating certain sections of the spiral rods of FIG. 4.
FIG. 7 is a schematic view illustrating an operational state of the spiral rods of FIG. 6.
FIG. 8 is a schematic perspective view illustrating certain sections of the spiral rods of FIG. 4.
FIG. 9 is a schematic diagram illustrating an operational state of the carrier of FIG. 3.
FIG. 10 is a schematic perspective view of a carrier according to a second embodiment of the present invention.
FIG. 11 is a schematic diagram illustrating an operational state of the carrier of FIG. 10.
FIG. 12 is a schematic perspective view of a carrier according to a third embodiment of the present invention.
FIG. 13 is a schematic perspective view of spiral rods included in the carrier of FIG. 12 and wheels and elastic members installed thereon by being connected thereto.
FIG. 14 is a schematic perspective view illustrating a cross bar included in the carrier of FIG. 12 and a guide bar integrated therewith.
FIG. 15 is a schematic diagram illustrating an operational state of the carrier of FIG. 12.
FIG. 16 is a schematic perspective view illustrating an improved exterior of the carrier of FIG. 12.
FIG. 17 is a schematic diagram illustrating an operational state of the carrier of FIG. 16.
FIG. 18 is a schematic perspective view of a carrier according to a fourth embodiment of the present invention.
FIG. 19 is a schematic perspective view of a body of the carrier of FIG. 18.
FIG. 20 is a schematic perspective view illustrating a frame installed in the body of FIG. 18.
FIG. 21 is a schematic perspective view illustrating a state in which a frame like the shown in FIG. 20 is installed in a body like that shown in FIG. 19.
FIG. 22 is a schematic perspective view illustrating a state in which spiral rods, wheels, a cross bar, and one or more elastic members are installed in the frame of FIG. 20.
FIG. 23 is a schematic diagram illustrating an operational state of the shown in FIG. 22.
FIG. 24 is a schematic diagram illustrating an operational state of the carrier of FIG. 18.
FIG. 25 is a schematic perspective view illustrating an improved exterior of the carrier of FIG. 18.
FIG. 26 is a schematic diagram illustrating an operational state of the carrier of FIG. 25.
FIG. 27 is a schematic perspective view of a carrier according to a fifth embodiment of the present invention.
FIGS. 28(a), (b), (c), and (d) are views illustrating a housing included in the carrier of FIG. 27 and an internal configuration thereof.
FIG. 29 is a schematic diagram illustrating an operational state of the carrier of FIG. 27.
FIG. 30 is a schematic perspective view of a carrier according to a sixth embodiment of the present invention.
FIG. 31 is a schematic diagram illustrating an operational state of the carrier of FIG. 30.
FIG. 32 is a schematic perspective view of a carrier according to a seventh embodiment of the present invention.
FIG. 33 is a schematic diagram illustrating an operational state of the carrier of FIG. 32.
FIG. 34 is a schematic perspective view of a carrier according to an eighth embodiment of the present invention.
FIG. 35 is a schematic diagram illustrating an operational state of the carrier of FIG. 34.
FIG. 36 is a view illustrating a shape of a cross bar included in the carrier of FIG. 34.
FIG. 37 is a schematic perspective view illustrating spiral rods included in the carrier of FIG. 34.
FIG. 38 is a schematic perspective view of spiral rods applicable to the carrier of FIG. 34.
FIG. 39 is an enlarged view illustrating one of the spiral rods of FIG. 38.

### [Mode for Invention]

The present invention relates to a carrier, particularly, to a carrier having foldable wheels, and more particularly, to a device for rotating spiral rods for folding wheels of a carrier.

Hereinafter, embodiments of the present invention will be described in detail with reference to the attached drawings.

Throughout the drawings, like elements will be referred to as like reference numerals.

Throughout the specification, when it is stated that one portion is connected to other portion, it may include not only a case of being directly connected but also a case of being indirectly connected with another element therebetween.

Singular expressions, unless contextually otherwise defined, include plural expressions.

However, the present invention may be embodied in several various forms and is not limited to the embodiments described below.

A device for rotating spiral rods for folding wheels of a carrier according to embodiments of the present invention may be generally applied to luggage, a luggage cart, and a hand truck but is not limited thereto.

Carriers 1100, 1300, 1400, 1500, 1600, 1700, and 1800 according to embodiments of the present invention are in the form of luggage, but the present invention is not limited thereto.

A carrier 1200 according to an embodiment of the present invention is in the form of a luggage cart or a hand truck, but the present invention is not limited thereto.

Bodies 410, 430, 440, and 450 of the carriers 1100, 1300, 1400, 1500, 1600, 1700, and 1800 according to the embodiments of the present invention may be a bag, a suitcase, a trunk, or a golf bag, but the present invention is not necessarily limited thereto.

Spiral lines 10a, 10b, 11a, 11b, 12a, 12b, 13a, 13b, 14a, 14b, 15a, 15b, 16a, 16b, 17a, and 17b in the carriers 1100, 1200, 1300, 1400, 1500, 1600, and 1700 are formed as grooves.

The shapes of the spiral lines 10a, 10b, 11a, 11b, 12a, 12b, 13a, 13b, 14a, 14b, 15a, 15b, 16a, 16b, 17a, and 17b are merely examples, and the present invention is not limited thereto.

Spiral lines 18a, 18b, 19a, and 19b included in spiral rods 190A and 190B of the carrier 1800 are formed protruding.

The shapes of the spiral lines 18a, 18b, 19a, and 19b are merely examples, and the present invention is not limited thereto.

One or more elastic members 31 and 32 in the carriers 1100, 1200, 1300, 1400, 1600, and 1800 according to the embodiments of the present invention each move cross bars 1, 2, 2', 4, and 8 in one direction.

One or more elastic members 35 included in the carrier 1500 move the cross bar 1 in one direction.

One or more elastic members 92 included in the carrier 1700 move a cross bar 6 in one direction.

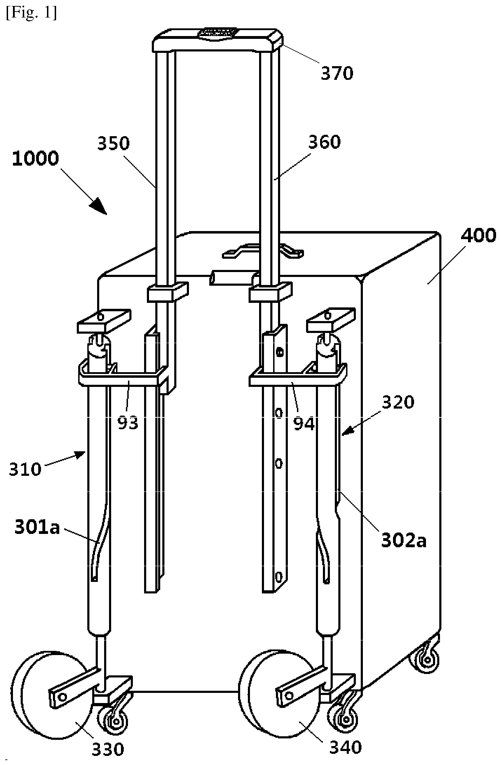

Meanwhile, FIG. 1 is a schematic perspective view of a carrier 1000 according to one embodiment of the previously registered patent filed by the present applicant. As shown in FIG. 1, a spiral rod 310 including a pair of spiral lines 301a and 301b and a spiral rod 320 including a pair of spiral rods 302a and 302b are installed on one surface of a body 400.

The carrier 1000 of FIG. 1 is in a state in which wheels 330 and 340 are unfolded and spread apart to both sides because a handle 370 is pulled up to move handle bars 350 and 360 up in such a way that the spiral rods 310 and 320 installed on the one surface of the body 400 rotate about an axis in a longitudinal direction by a certain angle.

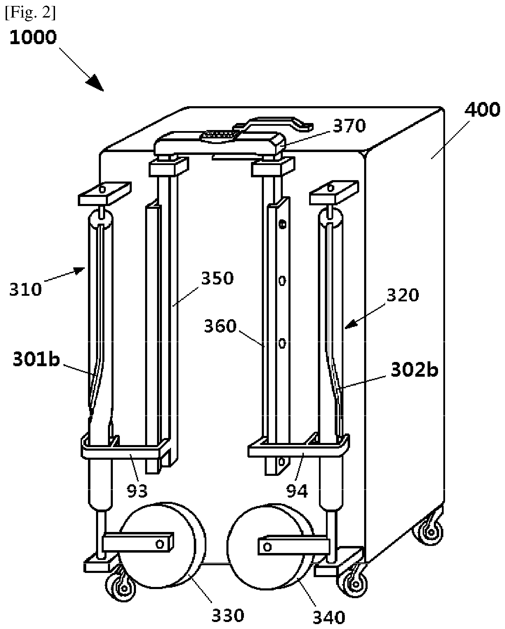

FIG. 2 illustrates a state in which the wheels 330 and 340 are folded toward the center because the handle 370 of the carrier 1000 of FIG. 1 is pressed down to move the handle bars 350 and 360 downward.

In the carrier 1000, the handle bar 350 and a cross bar 93 are integrated, and similarly the handle bar 360 and a cross bar 94 are integrated.

Accordingly, since it is necessary to form sections of the spiral lines 301a, 301b, 302a, and 302b formed on the spiral rods 310 and 320 which are longer than distances of moving the handle bars 350 and 360, the spiral rods 310 and 320 are also formed long. As described above, when the spiral rods 310 and 320 become long, since a weight of the carrier 1000 gets increased, effort corresponding to the weight is necessary when it is necessary to pick up the carrier 1000 and move during a trip.

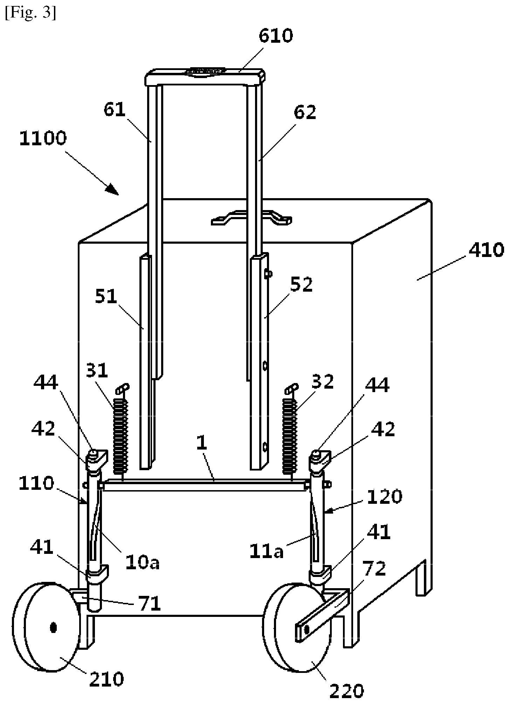

FIG. 3 is a schematic perspective view of a carrier 1100 according to a first embodiment of the present invention.

As shown in FIG. 3, a device for rotating spiral rods for folding wheels of a carrier includes a spiral rod 110 including one or more spiral lines 10a and 10b and a spiral rod 120 including one or more spiral lines 11a and 11b, a spiral line coupling portion 21 coupled with the spiral lines 10a and 10b and a spiral line coupling portion 22 coupled wit the spiral lines 11a and 11b, the cross bar 1 which connects a pair of such spiral rods 110 and 120, and one or more elastic members 31 and 32 which move the cross bar 1 in one direction. Here, a body 410 which accommodates objects may be further included. Since the body 410 is shown to illustrate a method of using the carrier 1100, the body 410 may be omitted as necessary.

In addition, as necessary, the device for rotating spiral rods of wheels of the carrier may further include other components.

As shown in FIG. 3, the pair of spiral rods 110 and 120 are installed at the body 410.

When being installed at the body 410, the spiral rods 110 and 120 may be installed to be parallel to each other or substantially parallel to each other with certain distances left and right, with a longitudinal direction as the vertical direction.

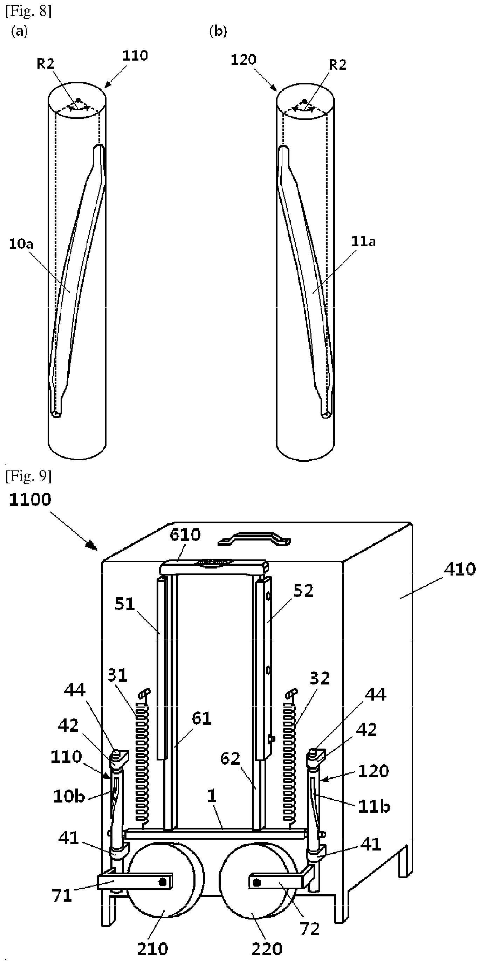

The spiral rod 110 includes the pair of spiral lines 10a and 10b at a rod with a certain length, and the spiral rod 120 includes the pair of spiral lines 11a and 11b at a rod with a certain length (refer to FIG. 9). The numbers of spiral lines of the spiral rod 110 and the spiral rod 120 may be one or more, but, as shown in FIGS. 3 and 9, preferably be two.

The spiral lines 10a, 10b, 11a, and 11b are formed as grooves with a certain depth. The shapes of the spiral lines 10a, 10b, 11a, and 11b are merely examples, and the present invention is not limited thereto. Tops or bottoms of the spiral lines 10a, 10b, 11a, and 11b may extend as straight lines with certain lengths in a longitudinal direction of the spiral rods 110 and 120, or all of them may linearly extend by a certain length in the longitudinal direction of the spiral rods 110 and 120 but are not limited thereto..

The pair of spiral lines 10a and 10b included in the spiral rod 110 and the pair of spiral lines 11a and 11b included in the spiral rod 120 are symmetrical to each other. When the pair of spiral lines 10a and 10b and the pair of spiral lines 11a and 11b are symmetrical to each other, they may be precisely symmetrical to each other but are not limited thereto.

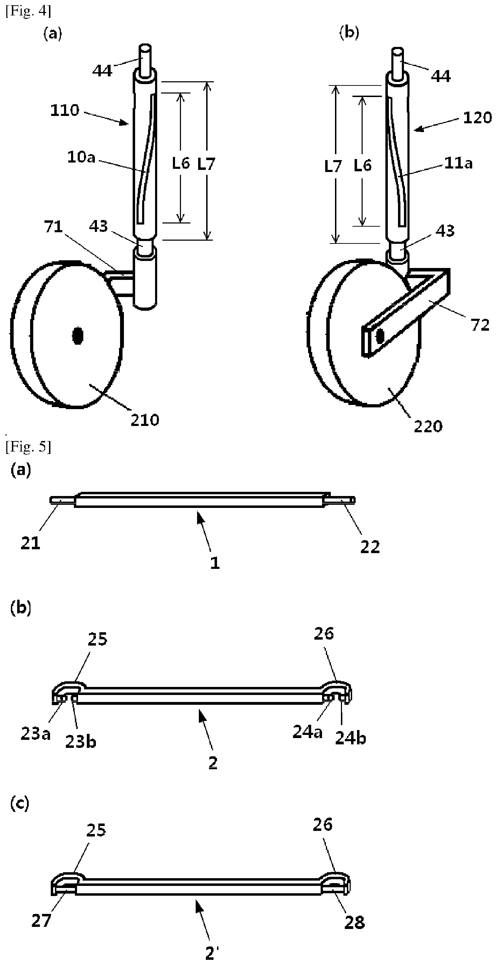

As shown in FIGS. 4(a) and 4(b), one portion of the spiral rods 110 and 120 and other portions have thicknesses smaller than other portions. The shapes of the spiral rod 110 of FIG. 4(a) and the spiral rod 120 of FIG. 4(b) are merely examples, and the present invention is not limited thereto.

A method of installing the spiral rods 110 and the spiral rod 120 of FIG. 4 at the body 410 may include positioning the one portions of the spiral rod 110 and the spiral rod 120 at sleeves 42 installed at the body 410 and positioning the other portions 43 at sleeves 41, but the present invention is not limited thereto.

A wheel supporter 71 may be provided at the spiral rod 110, and a wheel supporter 72 may be provided at the spiral rod 120. A wheel 210 and a wheel 220 may be connected to and installed at the spiral rod 110 and the spiral rod 120, respectively. A method of installing the wheels 210 and 220 at the spiral rod 110 and the spiral rod 120 may include installing the wheel 210 at the wheel supporter 71 included in the spiral rod 110 and installing the wheel 220 at the wheel supporter 72 included in the spiral rod 120. Also, the wheel 210 and the wheel 220 may be directly installed at the spiral rod 110 and the spiral rod 120, respectively, without the wheel supporter 71 and the wheel supporter 72. As the spiral rod 110 and the spiral rod 120 rotate about longitudinal directions thereof by certain angles, the wheel 210 connected to and installed at the spiral rod 110 and the wheel 220 connected to and installed at the spiral rod 120 also rotate by certain angles.

FIG. 5(a) is a schematic perspective view of the cross bar 1 included in the carrier 1100 of FIG. 3. The cross bar 1 includes the spiral line coupling portion 21 on the left and the spiral line coupling portion 22 on the right. The spiral line coupling portions 21 and 22 included in the cross bar 1 are formed in pin shapes. The shapes of the spiral line coupling portions 21 and 22 are merely examples, and the present invention is not limited thereto.

As shown in FIG. 3, the spiral rod 110 and the spiral rod 120 are connected by the cross bar 1. The spiral line coupling portion 21 passes through, is inserted in, and coupled with the spiral lines 10a and 10b, and similarly the spiral line coupling portion 22 passes through, is inserted in, and coupled with the spiral lines 11a and 11b, thereby installing the cross bar 1 connecting the spiral rod with the spiral rod 120.

Accordingly, the spiral line coupling portion 21 vertically slides along the spiral lines 10a and 10b and the spiral line coupling portion 22 also vertically slides along the spiral lines 11a and 11b as the cross bar 1 moves up or moves down, thereby allowing the spiral rod 110 and the spiral rod 120 to rotate about longitudinal directions by certain angles clockwise or counterclockwise. Here, as described above, since the pair of spiral lines 10a and 10b included in the spiral rod 110 and the pair of spiral lines 11a and 11b included in the spiral rod 120 are symmetrical to each other, rotation directions of the spiral rod 110 and the spiral rod 120 which rotate about the longitudinal directions thereof as the cross bar 1 moves up or moves down become opposite to each other.

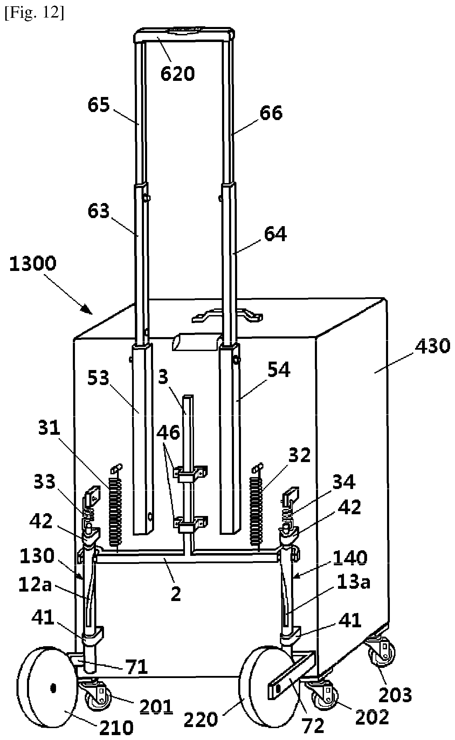

Instead of the cross bar of FIG. 5(a), a cross bar 2 like a shape shown in FIG. 5(b) or a cross bar 2' like a shape shown in FIG. 5(c) may be installed. (refer to FIG. 12)

The cross bar 2 of FIG. 5(b) includes one or more spiral line coupling portions 23a and 23b on the left thereof and connected by a connection portion 25 and similarly includes one or more spiral line coupling portions 24a and 24b on the right thereof and connected by a connection portion 26. The spiral line coupling portions 23a, 23b, 24a, and 24b included in the cross bar 2 are formed in pin shapes. The shapes of the spiral line coupling portions 23a, 23b, 24a, and 24b are merely examples, and the present invention is not limited thereto.

A pair of such spiral line coupling portions 23a and 23b provided on the left of the cross bar 2 of FIG. 5(b) face each other with end portions spaced apart by a certain distance. Similarly, a plurality of such spiral line coupling portions 24a and 24b on the right also face each other with end portions spaced apart by a certain distance. The spiral line coupling portions 23a and 23b and the spiral line coupling portions 24a and 24b having the shapes described above may be applied not only to a case in which the spiral lines 10a and 10b of the spiral rod 110 penetrate each other and the spiral lines 11a and 11b of the spiral rod 120 penetrate each other but also to a case in which the spiral lines 10a and 10b of the spiral rod 110 do not penetrate each other and the spiral lines 11a and 11b of the spiral rod 120 do not penetrate each other.

Meanwhile, the spiral line coupling portions 21 and 22 of the cross bar 1 of FIG. 5(a) and spiral line coupling portions 27 and 28 of the cross bar 2' of FIG. 5(c) are insertable when the spiral lines 10a and 10b of the spiral rod 110 and the spiral lines 11a and 11b of the spiral rod 120 do not penetrate each other.

One spiral line coupling portion 23b of the spiral line coupling portions 23a and 23b on the left of the cross bar 2 of FIG. 5(b) may be inserted in the spiral line 10a on one side included in the spiral rod 110, and the other spiral line coupling portion 23a may be inserted in the spiral line 10b on the other side. Similarly, one spiral line coupling portion 24a of the spiral line coupling portions 24a and 24b on the right of the cross bar 2 may be inserted in the spiral line 11a on one side included in the spiral rod 120, and the other spiral line coupling portion 24b may be inserted in the spiral line 11b on the other side. (refer to FIG. 12)

Meanwhile, the cross bar 2' of FIG. 5(c) includes the spiral line coupling portion 27 on the left and the spiral line coupling portion 28 on the right. Both end portions of the spiral line coupling portion 27 is connected by the connection portion 25, and similarly, both end portions of the spiral line coupling portion 28 is connected by the connection portion 26.

In the cross bar 2' of FIG. 5(c), like the cross bar 1 of FIG. 5(a), the spiral line coupling portion 27 on the left may penetrate and be inserted in the pair of spiral lines 10a and 10b included in the spiral rod 110, and the spiral line coupling portion 28 on the right may penetrate and be inserted in the pair of spiral lines 11a and 11b included in the spiral rod 120.

Accordingly, the spiral line coupling portion 27 is slidable along the spiral lines 10a and 10b, and similarly the spiral line coupling portion 28 is slidable along the spiral lines 11a and 11b.

The shapes of the cross bars 1, 2, and 2' of FIG. 5 are merely examples, and the present invention is not limited thereto.

The shapes of the cross bars 1, 2, and 2' of FIG. 5 may be applied to the carriers 1200, 1300, 1400, 1500, 1600, and 1700 according to the following embodiments.

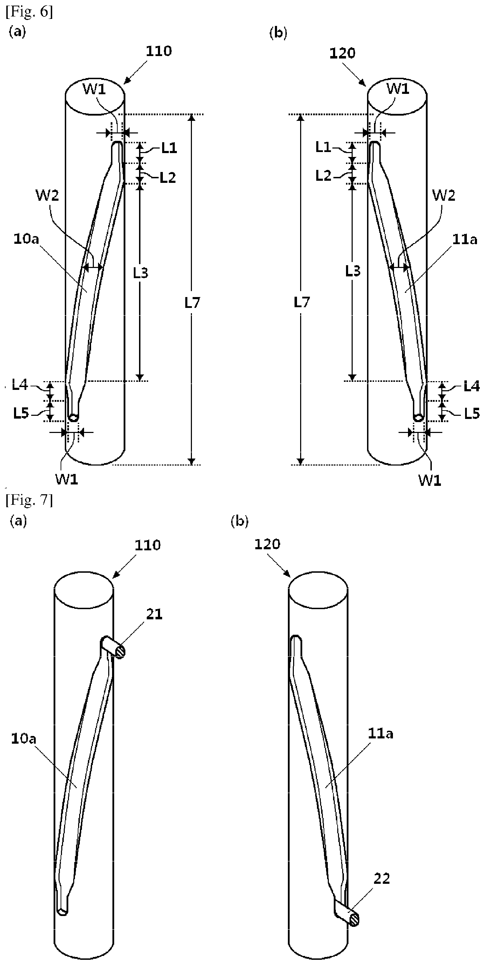

Meanwhile, FIGS. 6(a) and 6(b) are schematic perspective views illustrating a certain section L7 between a bottom of one portion 44 and a top of another portion 43 in each of the spiral rod 110 of FIG. 4(a) and the spiral rod 120 of FIG. 4(b).

As shown in FIG. 6, the spiral line 10a of the spiral rod 110 and the spiral line 11a of the spiral rod 120 include an upper narrow section L1 and a lower narrow section L5 with a small width W1 (not shown in the drawing, the spiral line 10b and the spiral line 11b are also formed in structures like the spiral line 11a and the spiral line 11b. A middle wide section L3 with a large width W2 is formed between the upper narrow section L1 and the lower narrow section L5. The upper narrow section L1 and the middle wide section L3 are connected by an upper connection section L2, and the lower narrow section L5 and the middle wide section L3 are connected by a lower connection section L4.

The upper connection section L2 has a structure which becomes gradually broader from top to bottom, and the lower connection section L4 has a structure which becomes gradually narrower from top to bottom.

FIG. 7(a) illustrates a state in which one of the spiral line coupling portions 21, 23b, and 27 provided on the left of the cross bars 1, 2, and 2' of FIG. 5 is positioned in the upper narrow section L1 in the spiral rod 110 of FIG. 6(a).

FIG. 7(a) illustrates a state in which one of the spiral line coupling portions 22, 24a, and 28 provided on the right of the cross bars 1, 2, and 2' of FIG. 5 is positioned in the lower narrow section L5 in the spiral rod 120 of FIG. 6(b).

In the state shown in FIG. 7(a) or the state shown in FIG. 7(b), since a phenomenon in which rotations left and right of the spiral rod 110 and the spiral rod 120 about the longitudinal directions fluctuates is effectively reduced, a phenomenon in which the wheel 210 connected to and installed in the spiral rod 110 and the wheel 220 connected to and installed in the spiral rod 120 rock unstably left and right may be reduced.

Meanwhile, the spiral line coupling portions 21, 22, 23a, 23b, 24a, 24b, 27, and 28 may be more easily and smoothly slidable in a vertical direction in the middle wide section L3.

Meanwhile, a difference between the width W1 of the upper narrow section and the width W2 of the middle wide section may be from 0.1 to 1 mm but is not limited thereto.

Through the upper connection section L2 or the lower connection section L4, the spiral line coupling portion 21 or the spiral line coupling portion 22 may more easily and smoothly move from the middle wide section L3 to the upper narrow section L1 or the lower narrow section L5.

The shape of the spiral line 10a of FIG. 6(a) and the shape of the spiral line 11a of FIG. 6(b) are merely examples, and the present invention is not limited thereto.

Meanwhile, FIGS. 8(a) and 8(b) illustrate an angle R2 which is formed by central axes of the spiral rods 110 and each of 120 upper central lines and lower central lines of the spiral lines 10a and 11b at the spiral rod 110 of FIG. 6(a) and the spiral rod 120 of FIG. 6(b).

When the wheel 210 and the wheel 220 are unfolded toward both sides of the body 410 as shown in FIG. 3 and the wheel 210 and the wheel 220 are folded toward the middle of both sides as shown in FIG. 9, angles by which the spiral rod 110 and the spiral rod 120 rotate about the longitudinal directions clockwise or counterclockwise may be 90° but is not limited thereto.

Meanwhile, as shown in FIG. 3, one or more elastic members 31 and 32 are installed while one of them is connected to the cross bar 1 and the other is connected to the body 410. Each of the one or more elastic members 31 and 32 may be a tension spring but is not limited thereto. (in FIG. 3, the two elastic members 31 and 32 formed as tension springs may be installed)

The one or more elastic members 31 and 32 move the cross bar 1 in one direction. In FIG. 3, the elastic members 31 and 32 move the cross bar 1 upward by their own restoring forces in such a way that the cross bar 1 moves upward and the wheels 210 and 220 are unfolded to both sides of the body 410.

As shown in FIG. 3, one or more handle bars 61 and 62 are installed at the body 410. (in FIG. 3, a pair of such handle bars 61 and 62 are installed at the body 410) The pair of handle bars 61 and 62 are vertically slidable along guide rails 51 and 52 installed at the body 410.

In FIG. 3, a handle 610 is lifted upward, and the pair of handle bars 61 and 62 are moved upward and fixed at those heights.

When the pair of handle bars 61 and 62 are allowed to slide down by pressing the handle 610 with a hand in FIG. 3, as the one or more handle bars 61 and 62 push the cross bar 1 down while the one or more handle bars 61 and 62 are in contact with the cross bar 1, the elastic members 31 and 32 stretch down, and the spiral rod 110 rotates by a certain angle counterclockwise and the spiral rod 120 rotates by a certain angle clockwise, thereby folding the wheel 210 and the wheel 220 toward the middle of both sides. (When the pair of handle bars 61 and 62 are allowed to slide down, the handle bar 61 and the handle bar 62 may be in contact with the cross bar 1 and may push down the cross bar 1 at the same time when lengths of the handle bars 61 and 62 are identical and the cross bar 1 is level. However, when the lengths of the handle bar 61 and the handle bar 62 are identical but the cross bar 1 is not level or when the cross bar 1 is level left and right but the lengths of the handle bar 61 and the handle bar 62 are not identical, only one of the handle bar 61 and the handle bar 62 may be in contact with the cross bar 1 and may push down the cross bar 1.)

Meanwhile, when the pair of handle bars 61 and 62 are moved upward by lifting the handle 610 in FIG. 9, since the one or more elastic members 31 and 32 are contracted by their own restoring force and lift up the cross bar 1, as the cross bar 1 move up and accordingly the spiral rod 110 rotates on the longitudinal direction by a certain angle clockwise and the spiral rod 120 rotates on the longitudinal direction by a certain angle counterclockwise, thereby the wheel 210 and the wheel 220 are unfolded toward both sides of the body 410 in FIG. 3.

Since the cross bar 1 and the pair of handle bars 61 and 62 are not integrated and separately formed, when the pair of handle bars 61 and 62 are continuously moved upward while the cross bar 1 ascends to a certain height due to the restoring force of the one or more elastic members 31 and 32 as shown in FIG. 3, the pair of handle bars 61 and 62 are separated from the cross bar 1, and a distance between the cross bar 1 and the pair of handle bars 61 and 62 increases.

In the structure described above in which the handle bars 61 and 62 are separable from the cross bar 1, when the handle 610 is raised up as shown in FIG. 3 and is pushed down as shown in FIG. 9, a vertical movement distance of the cross bar 1 may become shorter than a vertical movement distance of the handle bars 61 and 62. Vertical sections L6 of the spiral lines 10a, 11a, and 12b of the spiral rods 110 and 120 may become shorter (refer to FIG. 4), and, accordingly, lengths of the spiral rods 110 and 120 may also become shorter. When the lengths of the spiral rods 110 and 120 are reduced, the weight of the carrier 1100 may be reduced by a corresponding amount, and durability may be increased.

Meanwhile, in the structure as shown in FIGS. 1 and 2, in which the cross bars 93 and 94 and the handle bars 350 and 360 are integrated and inseparable, since it is necessary that the cross bars 93 and 94 and the handle bars 350 and 360 move together all the time, it is necessary that sections, in which the spiral lines 301a, 301b, 302a, and 302b are formed, be long as the lengths of raising the handle bars 350 and 360. Accordingly, the lengths of the spiral rods 310 and 320 may be great. When the spiral rods 310 and 320 become lengthy as described above, since the weight of the carrier 1000 becomes increased correspondingly, there is inconvenience of requiring corresponding force when it inevitably becomes necessary to lift and move the carrier 1000.

In a method of moving the carrier 1100 in the state shown in FIG. 3, for example, the carrier 1100 may be dragged or pushed to move by gripping the handle 610 and using the wheels 210 and 220 while the top of the carrier 1100 is allowed to incline by a certain angle in such a way that the wheels 210 and 220 are in touch with the ground.

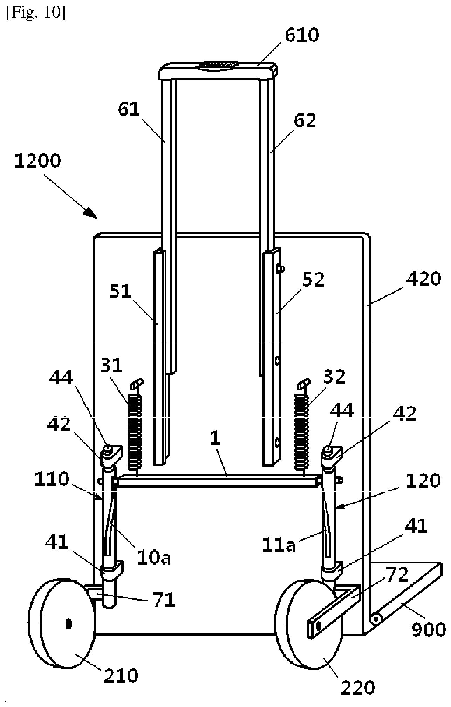

FIG. 10 is a schematic perspective view of a carrier 1200 according to a second embodiment of the present invention. Since the carrier 1200 of FIG. 10 is identical to the carrier 1100 of FIG. 3 except a body 420, like reference numerals refer to like portions, and a detailed description will be omitted. The carrier 1200 of FIG. 10 has a luggage cart shape or a hand truck shape, but the present invention is not limited thereto. It is possible to attach or detach a bag, a suitcase, a trunk, a golf bag, etc. to or from the body 420. Otherwise, it is possible to hang a load on the body 420 or to tie the body 420 with a rope, etc.

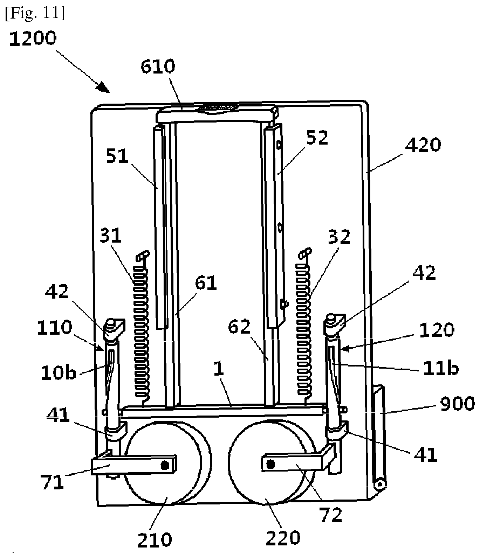

As shown in FIG. 10, the body 420 may include a loading plate 900 for loading stuff. The body 420 and the loading plate 900 may be in an overall L shape or the loading plate 900 may be folded to be close to the body 420 as shown in FIG. 11.

Since a state shown in FIG. 11 in which the handle 610, the wheels 210 and 220, and the loading plate 900 are folded occupies less space, it is convenient to store the carrier 1200.

FIG. 12 is a schematic perspective view of a carrier 1300 according to a third embodiment of the present invention.

Since the carrier 1300 of FIG. 12 is similar to the carrier 1100 of FIG. 3, like reference numerals refer to like elements, and a detailed description will be omitted.

As shown in FIG. 12, the one or more handle bars 63 and 64 and handle bar extending portions 65 and 66 are connected in a telescopic method, thereby being doubly foldable. Here, other handle bar extending portions may be added to the handle bar extending portions 65 and 66 to be connected by a telescopic method, thereby allowing the handle bars 63 and 64 and the handle bar extending portions to be triply foldable.

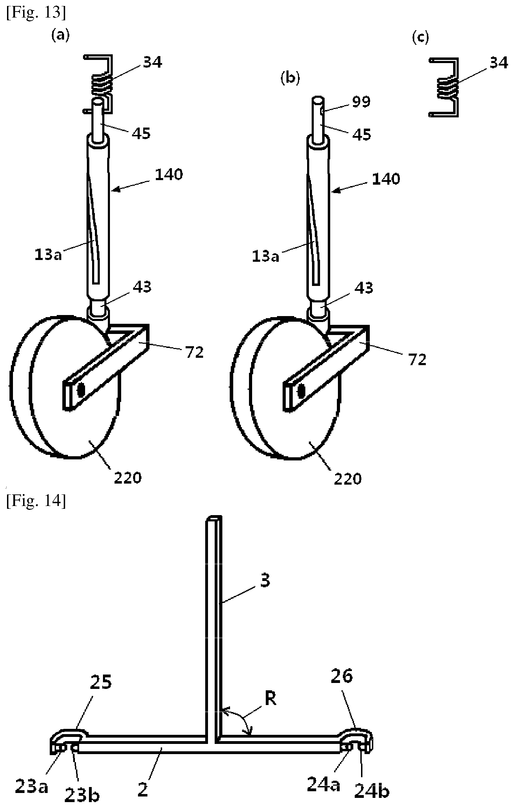

As shown in FIG. 12, a spiral rod 140, the wheel 220, and an elastic member 34 shown in FIG. 13(a) are installed on one side of the body 430.

The spiral rod 140 of FIG. 13(a) has a shape similar to that of the spiral rod 120 of FIG. 4(b). Also, the spiral rod 140 of FIG. 13 is also installed on one side of the body 430 of FIG. 12 in the same way that the spiral rod 120 of FIG. 4(b) is installed in the body 410 of FIG. 3. Similarly, a spiral rod 130 is installed on the other side of the body 430.

The shape of the spiral rod 140, 2 of FIG. 13(b) is merely an example, and the present invention is not limited thereto.

In the carrier 1300 of FIG. 12, one side of the elastic member 34 shown in FIG. 13(c) is inserted into a hole 99 formed at one portion 45 of the spiral rod 140 of FIG. 13(b), thereby connecting the spiral rod 140 with the one side of the elastic member 34 as shown in FIG. 13(a) and connecting the other side of the elastic member 34 with the body 430. Similarly, one side of an elastic member 33 is connected to the spiral rod 130, and the other side is connected to the body 430.

The elastic members 33 and 34 may be torsion springs in a coil shape but are not limited thereto. Positions at which the one or more elastic members 33 and 34 may be above the spiral rods 130 and 140 as shown in FIG. 12 but are not limited thereto. When the elastic members 33 and 34 are positioned above the spiral rods 130 and 140 as shown in FIG. 12, the elastic members 33 and 34 may more freely and easily perform torsion function without being interfered by the spiral rods 130 and 140.

The elastic members 33 and 34 may allow the spiral rods 130 and 140 to rotate about longitudinal directions thereof due to restoring force thereof, that is, the torsion function or the cross bar 2 may be moved upward by a certain length due to a screw function, when the spiral rods 130 and 140 rotate as such.

FIG. 14 is a schematic perspective view illustrating the cross bar 2 included in the carrier 1300 of FIG. 12 and a guide bar 3 integrated therewith.

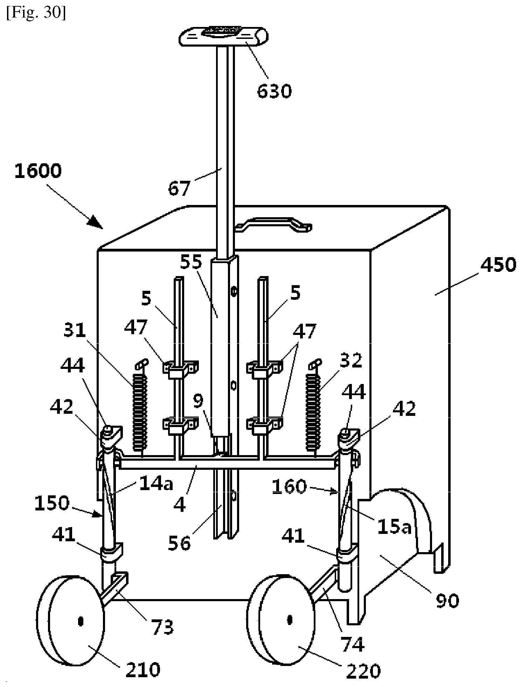

The cross bar 2 of FIG. 14 has the same structure as that of the cross bar 2 of FIG. 5(b), and the guide bar 3 intersects the cross bar 2 and stretches upward by a certain length. Although not shown in the drawing, if necessary, the guide bar 3 may intersect the cross bar 2 and stretch downward by a certain length. Also, the number of such guide bars 3 integrated with the cross bar 2 may be one or more as shown in FIG. 30.

An angle R formed by the guide bar 3 and the cross bar 2 which intersect each other may be 90° but is not limited thereto.

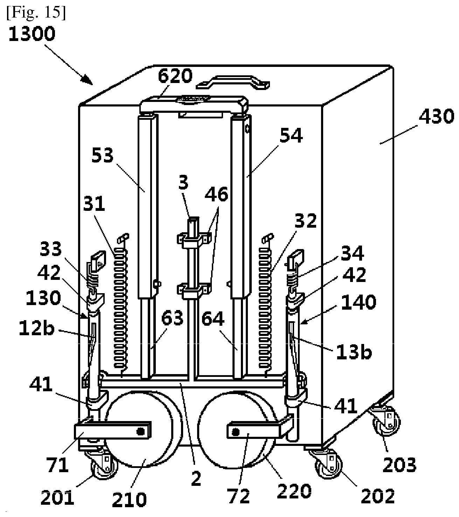

The spiral rod 130 includes one or more spiral lines 12a and 12b, and the spiral rod 140 includes one or more spiral lines 13a and 13b (it is shown in the drawing that the spiral rod 130 and the spiral rod 140 each include two spiral lines) (refer to FIG. 15). The spiral lines 12a, 12b, 13a, and 13b are each formed as grooves with certain depths.

As the cross bar 1 is connected and installed between the spiral rod 110 and the spiral rod 120 in FIG. 3, the cross bar 2 connects and is installed between the spiral rod 130 and the spiral rod 140 in FIG. 12.

One spiral line coupling portion 23b of the spiral line coupling portions 23a and 23b on the left of the cross bar 2 may be inserted in the spiral line 12a on one side included in the spiral rod 130, and the other spiral line coupling portion 23a may be inserted in the spiral line 12b on the other side. Similarly, one spiral line coupling portion 24a of the spiral line coupling portions 24a and 24b on the right of the cross bar 2 is inserted in the spiral line 13a on one side included in the spiral rod 130 and the other spiral line coupling portion 24b is inserted in the spiral line 13b on the other side.

Accordingly, the pair of spiral line coupling portions 23a and 23b on the left of the cross bar 2 are correspondingly coupled with a pair of such spiral lines 12a and 12b included in the spiral rod 130, and a pair of such spiral line coupling portions 24a and 24b on the right of the cross bar 2 are correspondingly coupled with a pair of such spiral lines 13a and 13b included in the spiral rod 140 in such a way that the cross bar 2 is installed with connecting the spiral rod 130 and the spiral rod 140.

Accordingly, the spiral line coupling portion 23b is slidable along the spiral line 12a, and similarly the spiral line coupling portion 23a is slidable along the spiral line 12b.

Also, the spiral line coupling portion 24a is slidable along the spiral line 13a, and similarly the spiral line coupling portion 24b is slidable along the spiral line 13b.

Also, the guide bar 3 integrated with the cross bar 2 is vertically slidable through one or more sleeves 46 installed at the body 430.

Accordingly, as the cross bar 2 vertically moves, the spiral line coupling portions 23a and 23b on the left and the spiral line coupling portions 24a and 24b on the right vertically slide along the spiral lines 12a and 12b and the spiral lines 13a and 13b at the same time in such a way that the spiral rod 130 and the spiral rod 140 may rotate about the longitudinal directions thereof clockwise or counterclockwise by certain angles. Here, when the cross bar 2 vertically moves, the guide bar 3 vertically slides through the sleeves 46, thereby allowing the cross bar 2 to vertically move while being horizontal left and right or being close to horizontal. Also, a phenomenon in which the cross bar 2 rolls forward and backward about a longitudinal direction thereof is prevented to allow the cross bar 2 to be more stably and smoothly vertically movable.

One or more elastic members 31 and 32 move the cross bar 2 in one direction. In FIG. 12, the one or more elastic members 31 and 32 move the cross bar 2 upward, thereby allowing the cross bar 2 to be on top.

When a handle 620 is pushed with, for example, a hand to move the handle bars 63 and 64 downward in FIG. 12, one or more of such handle bars 63 and 64 are in contact with the cross bar 2 and pushes the cross bar 2 downward in such a way that the elastic members 31 and 32 stretch downward by certain lengths as shown in FIG. 15. Also, the spiral rod 130 rotates counterclockwise by a certain angle and the spiral rod 140 rotates clockwise by a certain angle in such a way that the wheels 210 and 220 are folded to the middle of both sides and additionally the elastic members 33 and 34 are distorted by certain angles.

Meanwhile, when the handle 620 is raised upward and the handle bars 63 and 64 are moved upward in FIG. 15, due to restoring force of the elastic members 31 and 32 and restoring force of the elastic members 33 and 34, as shown in FIG. 12, the cross bar 2 moves upward, the spiral rod 130 rotates about the longitudinal direction clockwise by a certain angle, and the spiral rod 140 rotates about the longitudinal direction counterclockwise by a certain angle, thereby unfolding the wheels 210 and 220 toward both sides of the body 430. Here, even though only the elastic members 31 and 32 are installed or the elastic members 33 and 34 are installed, when the elastic members 31 and 32 and the elastic members 33 and 34 are installed at the same time, the restoring force of the elastic members 31 and 32 and the restoring force of the elastic members 33 and 34 mutually function together in such a way that the cross bar 2 may move upward and the spiral rods 130 and 140 may more easily and smoothly rotate clockwise or counterclockwise by certain angles.

Meanwhile, in a method of moving the carrier in FIG. 12, for example, not only a top of the carrier 1300 of FIG. 12 slightly inclines to allow the wheels 210 and 220 to be in touch with the ground and the carrier 1300 may be dragged or pushed to move by gripping the handle 620 and using the wheels 210 and 220 but also the carrier 1300 is movable by being pushed using casters 201, 202, and 203 installed below the body 430 while the carrier 1300 stands.

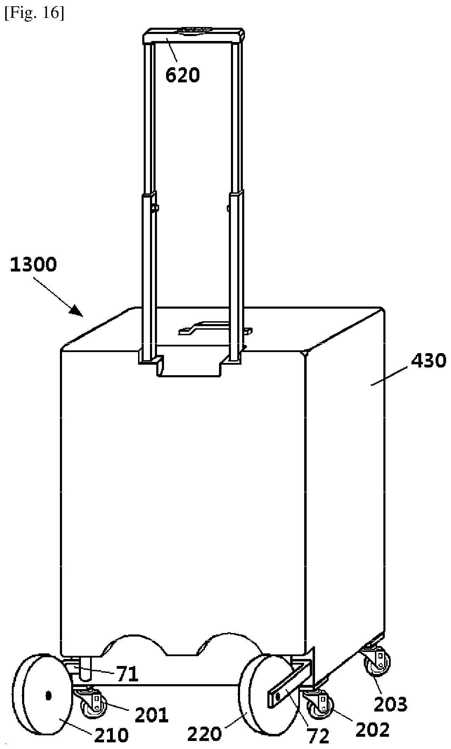

Meanwhile, FIG. 16 is a schematic perspective view illustrating a state in which the elastic members 31 and 32, the cross bar 2, the guide bar 3, etc. installed at the body 430 are hidden to allow an external shape of the carrier 1300 of FIG. 12 to look neater and better.

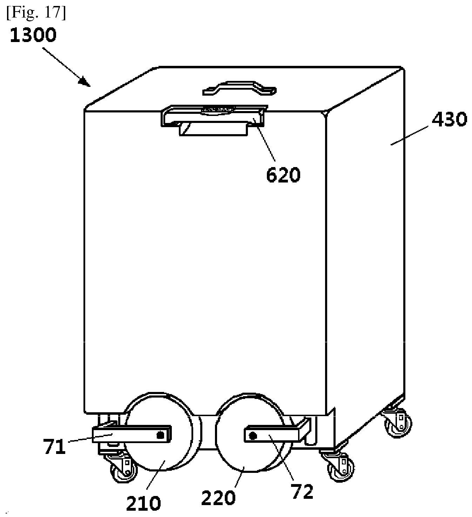

FIG. 17 illustrates a state in which the handle 620 is pushed down and the wheels 210 and 220 are folded to the middle of both sides in the carrier 1300 of FIG. 16.

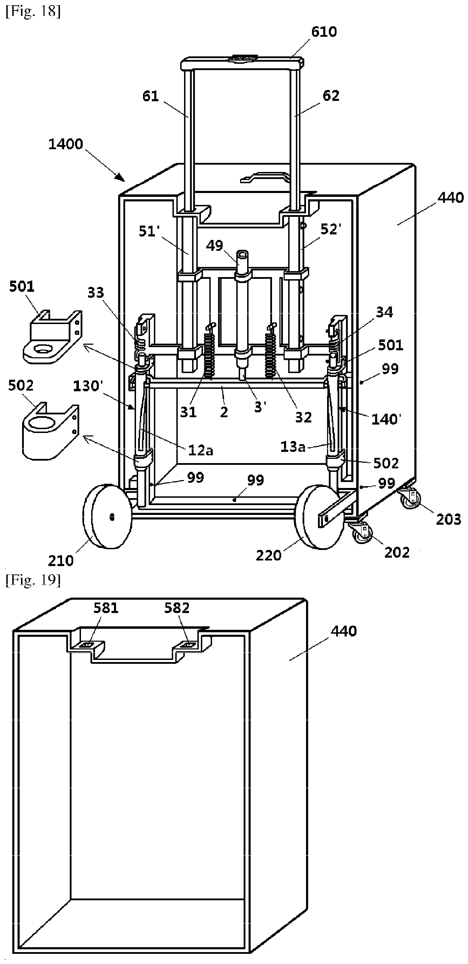

FIG. 18 is a schematic perspective view of a carrier 1400 according to a fourth embodiment of the present invention. Since the carrier 1400 of FIG. 18 is similar to the carrier 1300 of FIG. 12, like reference numerals refer to like elements, and a detailed description will be omitted.

The one or more elastic members 31 and 32 move the cross bar 2 in one direction. In FIG. 18, the one or more elastic members 31 and 32 move the cross bar 2 upward, thereby allowing the cross bar 2 to be on top.

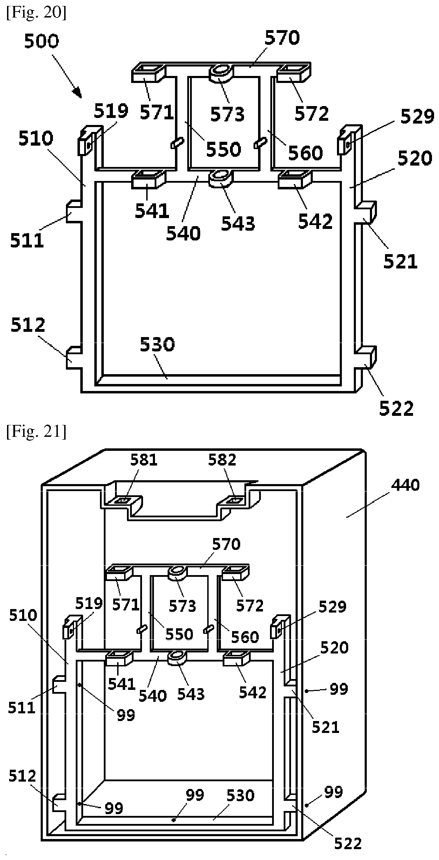

In the carrier 1400 of FIG. 18, a frame 500 as shown in FIG. 20 is installed at a body 440 as shown in FIG. 19 in the same manner as in FIG. 21, and the body 440 and the frame 500 are fastened by one or more fastening means 99. The body 440 includes a hole 581 and a hole 582 for fixing a sleeve 51' and a sleeve 52'.

The fastening means 99 which fasten the body 440 and the frame 500 may be diverse, for example, rivets, screws, bolts, nuts, or adhesives but are not limited thereto. Otherwise, the body 440 and the frame 500 may be fastened by being tied by a wire, a metal band, or a plastic band but are not limited thereto. Otherwise, the body 440 and the frame 500 may be integrated by injection molding, etc. but are not limited thereto.

In the frame 500, a lower supporter 530, a left supporter 510, a right supporter 520, and a central supporter 540 are mutually connected, and an upper supporter 570 is connected above the central supporter 540 by one or more connecting supporter 550 and 560. The central supporter 540 includes a holder 541 and a holder 542 for installing the sleeves 51' and 52', and similarly, the upper supporter 570 includes a holder 571 and a holder 572 for installing the sleeves 51' and 52'. The handle bar 61 and the handle bar 62 are positioned in the sleeve 51' and the sleeve 52' and become vertically slidable.

Also, the central supporter 540 and the upper supporter 570 include a holder 543 and a holder 573 for installing a sleeve 49. A guide bar 3' is positioned in the sleeve 49 and becomes vertically slidable.

The left supporter 510 includes one or more spacers 511 and 512, and similarly, the right supporter 520 includes one or more spaces 521 and 522. The left supporter 510 may be maintained at a certain distance from the body 440 due to the spacers 511 and 512, and similarly, the right supporter 520 may be maintained at a certain distance from the body 440 due to the spacers 521 and 522.

Also, the left supporter 510 includes a hole 519 for connecting the elastic member 33 by inserting one side of the elastic member 33 therein, and similarly, the right supporter 520 includes a hole 529 for connecting the elastic member 34 by inserting one side of the elastic member 34 therein. The structure and shape of the frame 500 and 22 are merely examples, and the present invention is not limited thereto.

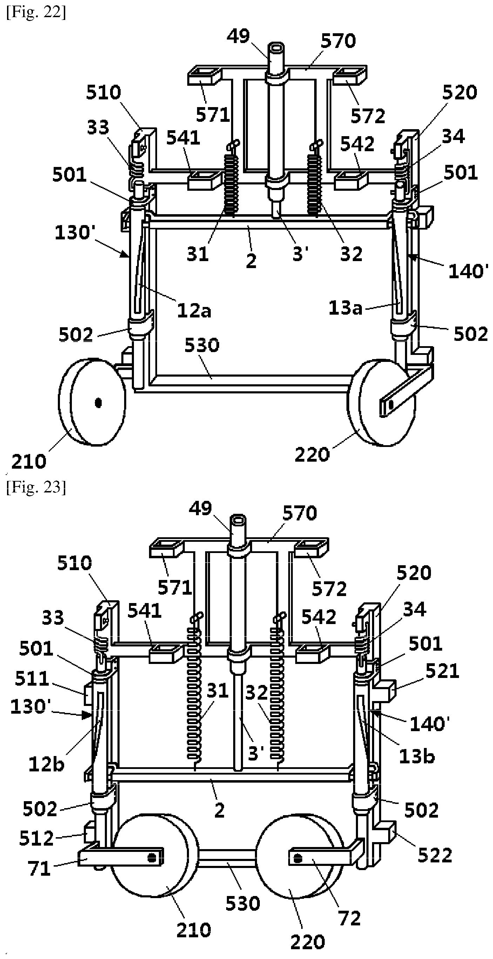

FIG. 22 is a perspective view schematically illustrating that a spiral rod 130' is installed at the left supporter 510 of the frame 500 by a sleeve 502 and a bracket 501 and, similarly, a spiral rod 140' is installed also at the right supporter 520 by the sleeve 502 and the bracket 501. The cross bar 2 is installed connecting the spiral rod 130' with the spiral rod 140' as shown in FIG. 12.

As shown in FIG. 22, as the elastic members 31 and 32 contract, the cross bar 2 is pulled upward in such a way that the cross bar 2 moves upward and the wheel 210 and the wheel 220 are unfolded to front of both sides.

FIG. 23 is a perspective view schematically illustrating a state in which the cross bar 2 is moved downward in the state shown in FIG. 22 in such a way that the elastic members 31 and 32 stretch by certain lengths, the spiral rod 130' rotates counterclockwise by a certain angle, the spiral rod 140' rotates clockwise by a certain angle, the wheel 210 and the wheel 220 are folded to the middle of both sides, and the elastic members 33 and 34 are twisted by certain angles.

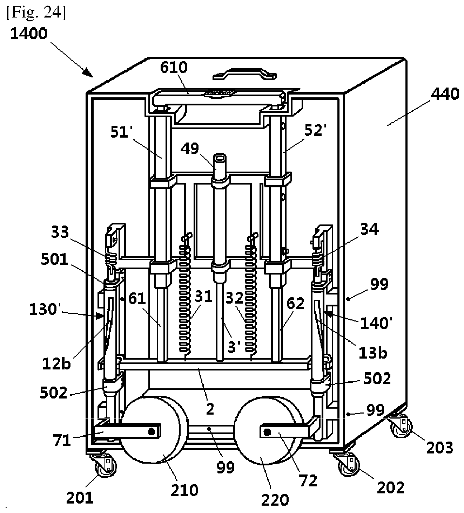

In FIG. 24, as the one or more handle bars 61 and 62 are moved downward by pushing the handle 610 in the carrier of FIG. 18, the wheel 210 and the wheel 220 are folded to the middle of both sides as shown in FIG. 24.

When the handle 610 is raised in the state shown in FIG. 24, due to contractile force of the one or more elastic members 31 and 32 and torsion force of the one or more elastic members 33 and 34, the cross bar 2 moves upward, the spiral rod 130' rotates clockwise by a certain angle, and the spiral rod 140' rotates counterclockwise by a certain angle, thereby unfolding the wheel 210 connected to and installed at the spiral rod 130' and the wheel 220 connected to and installed at the spiral rod 140' to front of both sides as shown in FIG. 18.

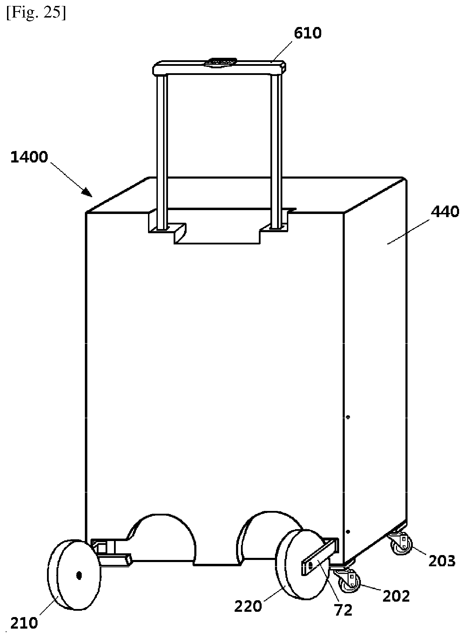

FIG. 25 is a schematic perspective view illustrating a state in which the elastic members 31 and 32, the cross bar 2, the guide bar 3', etc. are hidden to allow an external shape of the carrier 1400 of FIG. 18 to look neater and better.

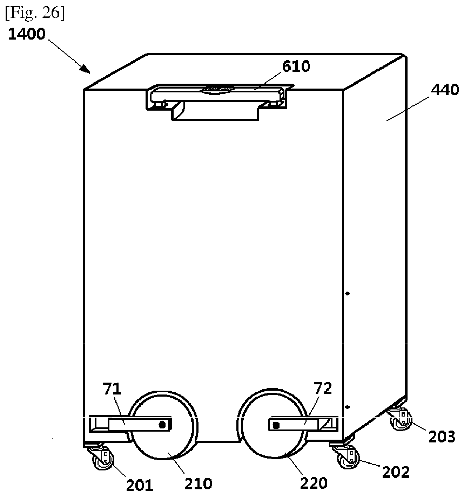

FIG. 26 illustrates a state in which the handle 610 is pushed down and the wheels 210 and 220 are folded to the middle of both sides in the carrier 1400 of FIG. 25.

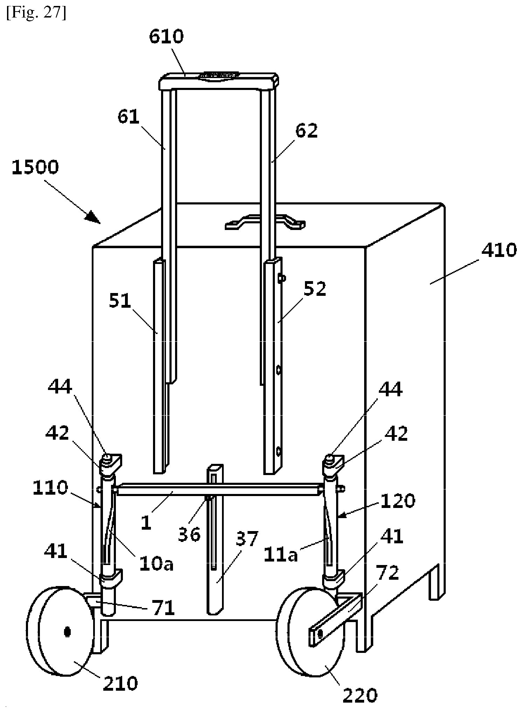

FIG. 27 is a schematic perspective view of a carrier 1500 according to a fifth embodiment of the present invention.

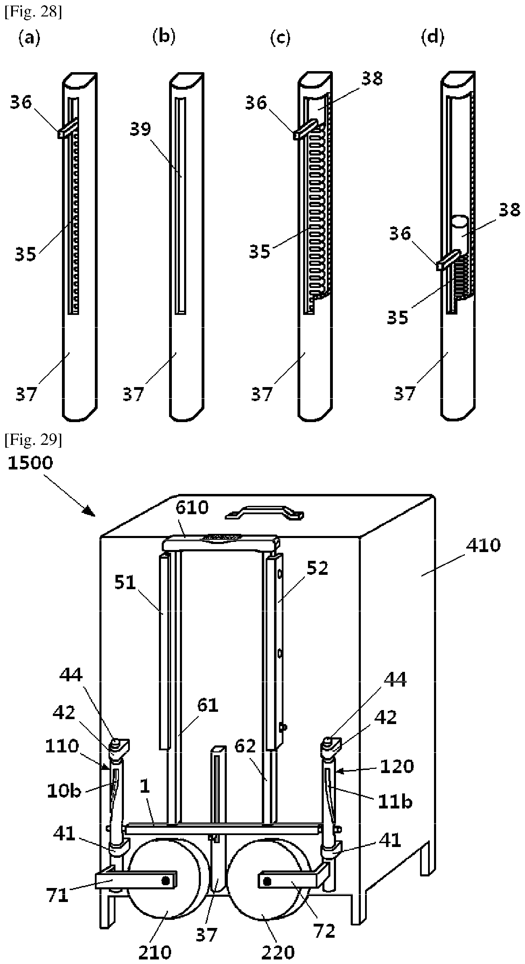

Since the carrier 1500 of FIG. 27 is identical to the carrier 1100 of FIG. 3 except that one or more housings 37 including the elastic member 35 as shown in FIG. 28(a) are installed on the body 410 instead of the elastic members 31 and 32, like reference numerals refer to like elements, and a detailed description will be omitted.

FIG. 28(b) is a schematic perspective view of the housing 37 of FIG. 28(a). The housing 37 includes a slot 39.

FIG. 28(c) is a partial cross-sectional view illustrating that the elastic member 35 and a guide bar 38 integrated with a pusher 36 formed thereabove are installed in the housing 37 of FIG. 28(b). The elastic member 35 may be a compression spring as shown in the drawing.

Compared with FIG. 28(c), FIG. 28(d) illustrates a state in which the guide bar 38 and the pusher 36 are moved downward and the elastic member 35 is compressed.

As shown in FIG. 28(a), the pusher 36 partially protrudes outward from the slot 39 and is vertically slidable.

The elastic member 35 moves the cross bar 1 in one direction. In FIG. 27, since the elastic member 35 formed of the compression spring moves the cross bar 1 upward in such a way that the cross bar 1 moves upward and the wheels 210 and 220 are folded to front of both sides of the body 410.

In FIG. 27, due to restoring force of the elastic member 35 in the housing 37 installed at the body 410 of the carrier 1500, the pusher 36 is pushing the cross bar 1 upward.

FIG. 29 illustrates a state in which as the pair of handle bars 61 and 62 are moved downward by pushing the handle 610 in the carrier 1500 of FIG. 27, the one or more handle bars 61 and 62 come into contact with the cross bar 1 and push the cross bar 1 downward in such a way that the spiral rod 110 and the spiral rod 120 rotate about the longitudinal directions thereof by certain angles, thereby folding the wheels 210 and 220 to the middle of both sides. Here, the cross bar moves downward and pushes the pusher 36 in such a way that the elastic member 35 becomes compressed as shown in FIG. 28(d).

Meanwhile, as the guide bar 3 is provided at the cross bar 2 of FIG. 12 and guide bars 5 are provided at a cross bar 4 of FIG. 30, one or more guide bars may be provided at the cross bar 1 of FIG. 27.

Also, as the one or more elastic members 33 and 34 are connected to and installed at the pair of spiral rods 130 and 140 of FIG. 12, similarly, the one or more elastic members 33 and 34 may be connected to and installed at the pair of spiral rods 110 and 120 of FIG. 27.

FIG. 30 is a schematic perspective view of a carrier 1600 according to a sixth embodiment of the present invention.

Since the carrier 1600 of FIG. 30 is similar to the carrier 1100 of FIG. 3 and the carrier 1300 of FIG. 12, like reference numerals refer to like elements, and a detailed description will be omitted.

As shown in FIG. 30, one or more handle bars 67 are installed in one or more sleeves 55 at a body 450, and the handle bar 67 is vertically slidable through the sleeve 55. (In FIG. 30, one handle bar 67 is installed in one sleeve 55 at the body 450.)

In the carrier 1600 of FIG. 30, a spiral rod 150 including one or more spiral lines 14a and 14b and a spiral rod 160 including one or more spiral lines 15a and 15b are connected by the cross bar 4. The cross bar 4 has a shape like that of the cross bar 2 of FIG. 5(b) or the cross bar 2' of FIG. 5(c).

Also, since the one or more guide bars 5 are formed at the cross bar 4 of FIG. 30 as the guide bar 3 is formed at the cross bar 2 of the carrier 1300 of FIG. 12, the guide bars 5 are vertically slidable through one or more sleeves 47. (In FIG. 30, two guide bars 5 are provided at the cross bar 4.)

Also, since a protrusion 9 is formed at the cross bar 4, the protrusion 9 is positioned in a sleeve groove 56.

Since the protrusion 9 provides a more enlarged contact portion area when the handle bar 67 is in contact with the cross bar 4, the handle bar 67 may more reliably and stably push the cross bar 4 while the handle bar 67 slides downward.

The one or more elastic members 31 and 32 move the cross bar 2 in one direction. In FIG. 30, the one or more elastic members 31 and 32 move the cross bar 4 upward due to the restoring force thereof, thereby allowing the cross bar 4 to be on top.

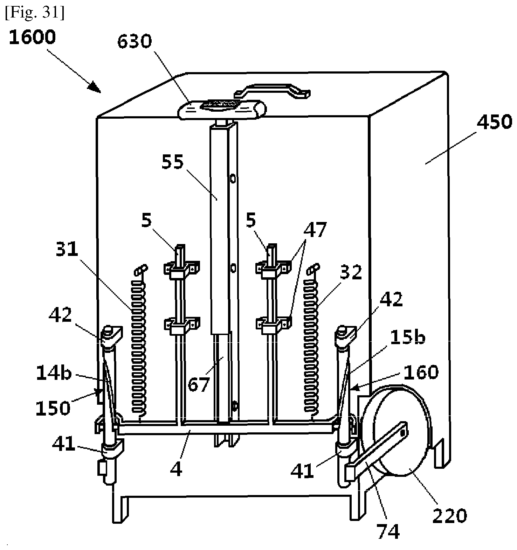

When a handle 630 in FIG. 30 is pushed, the handle bar 67, by moving downward, comes into contact with the cross bar 4 and pushes the cross bar 4 downward, and the wheel 210 installed at a wheel supporter 73 and the wheel 220 installed at a wheel supporter 74 tilt backward about longitudinal directions of the spiral rod 150 and the spiral rod 160 and are positioned closer to portions 90 depressed inwards formed at both sides of the body 450, as shown in FIG. 31.

When the handle bar 630 is allowed to slide upward by raising the handle 630 in the state of FIG. 31, since the one or more elastic members 31 and 32 contract due to restoring force thereof and pull the cross bar 4 upward, the cross bar 4 is raised upward, the spiral rod 150 rotates counterclockwise by a certain angle, and the spiral rod 160 rotates clockwise by a certain angle, thereby unfolding the wheel 210 and the wheel 220 toward both sides of the body 450, as shown in FIG. 30.

When the wheels 210 and 220 tilt backward as shown in FIG. 31 from the state of being unfolded toward both sides of the body 450 as shown in FIG. 30, angles at which the spiral rod 150 and the spiral rod 160 rotate about longitudinal directions thereof clockwise or counterclockwise may be 180° but are not limited thereto.

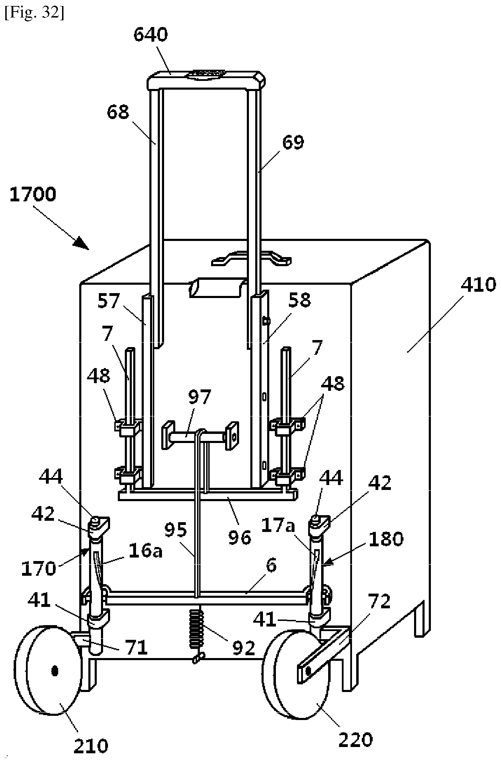

FIG. 32 is a schematic perspective view of a carrier 1700 according to a seventh embodiment of the present invention.

Since the carrier 1700 of FIG. 32 is similar to the carrier 1100 of FIG. 3 and the carrier 1600 of FIG. 30, like reference numerals refer to like elements and a detailed description will be omitted.

As shown in FIG. 32, a spiral rod 170 including one or more spiral lines 16a and 16b and a spiral rod 180 including one or more spiral lines 17a and 17b are connected by the cross bar 6. The spiral lines 16a, 16b, 17a, and 17b are formed as grooves with certain depths.

The cross bar 6 has a shape like that of the cross bar 2 of FIG. 5(b) or the cross bar 2' of FIG. 5(c).

As shown in FIG. 32, a traction bar 96 and one or more guide bars 7 integrated therewith are installed at the body 410. Since the guide bars 7 are vertically slidable through sleeves 48, the guide bars 7 help the traction bar 96 in keeping balance left and right when the traction bar 96 moves upward or downward.

A switching shaft 97 is installed at the body 410, and a rope 95 passes across the switching shaft 97 and is connected between the cross bar 6 and the traction bar 96. The switching shaft 97 may have a roller structure for smooth movement of the rope 95 and may be pivotable about a longitudinal direction forward and backward.

One side of each of the one or more elastic members 92 is connected to the cross bar 6 and other side thereof is connected to and installed at the body 410. The elastic members 92 may be tension springs but are not limited thereto. In FIG. 32, one elastic member 92 formed of a tension spring is installed while one side is connected to the cross bar 6 and the other side is connected to the body 410.

The elastic member 92 moves the cross bar 6 in one direction. In FIG. 32, the elastic member 92 moves the cross bar 6 downward, thereby allowing the cross bar 6 to be on bottom.

Since the elastic member 92 contracts due to restoring force thereof and pulls the cross bar 6 downward as shown in FIG. 32, the cross bar 6 moves downward, the wheels 210 and 220 are unfolded toward front of both sides of the body 410, and additionally the rope 95 passes across the switching shaft 97 and pulls the traction bar 96 to allow the traction bar 96 to be on top.

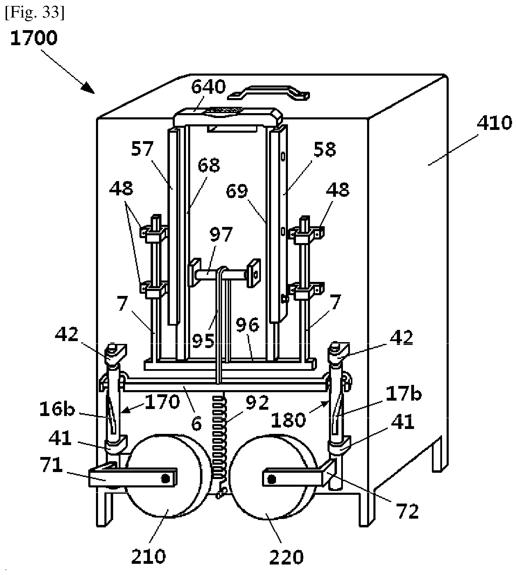

Meanwhile, when one or more handle bars 68 and 69 are allowed to slide downward along guide rails 57 and 58 by pushing a handle 640 in FIG. 32, as the one or more handle bars 68 and 69 push the traction bar 96, the rope 95 pulls the cross bar 6 upward to move the cross bar 6 upward. Accordingly, the spiral rod 170 rotates about a longitudinal direction thereof counterclockwise by a certain angle and the spiral rod 180 rotates about a longitudinal direction thereof clockwise by a certain angle, thereby folding the wheel 210 and the wheel 220 to the middle of both sides, as shown in FIG. 33.

When a pair of such handle bars 68 and 69 are allowed to slide upward by pushing the handle 640, the cross bar 6 moves downward due to the elastic member 92, the traction bar 96 moves upward by a certain distance, the spiral rods 170 rotate about the longitudinal direction thereof clockwise by a certain angle and the spiral rod 180 rotates about the longitudinal direction thereof counterclockwise by a certain angle, thereby spacing apart and unfolding the wheels 210 and 220 toward front of both sides of the body 410, as shown in FIG. 32.

Meanwhile, as the guide bar 3 is provided at the cross bar 2 of FIG. 12 and the guide bars 5 are provided at the cross bar 4 of FIG. 30, although not shown in the drawing, one or more guide bars may be provided at the cross bar 6 of FIG. 32, thereby allowing the cross bar 6 to maintain left and right balance to be close to level balance while the cross bar 6 is moving upward or downward.

In addition, although not shown in the drawing, the cross bar 6 is pushed from top to bottom by restoring force of one or more elastic members formed of compression springs in the carrier 1700, as shown in FIG. 27, instead of the one or more elastic members 92 formed of tension springs.

Meanwhile, as the one or more elastic members 33 and 34 are connected to and installed at the pair of spiral rods 130 and 140 of FIG. 12, similarly, the one or more elastic members 33 and 34 may be connected to and installed at the pair of spiral rods 170 and 180 of FIG. 32.

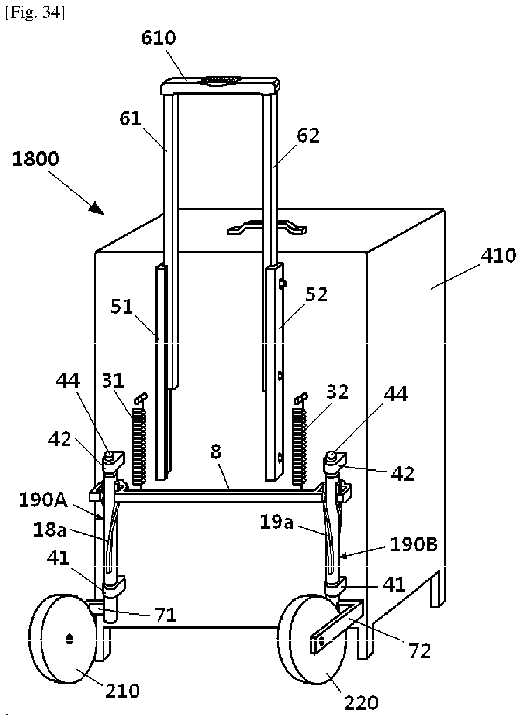

FIG. 34 is a schematic perspective view of a carrier 1800 according to an eighth embodiment of the present invention.

Since the carrier 1800 of FIG. 34 is similar to the carrier 1100 of FIG. 3, like reference numerals refer to like elements, and a detailed description will be omitted.

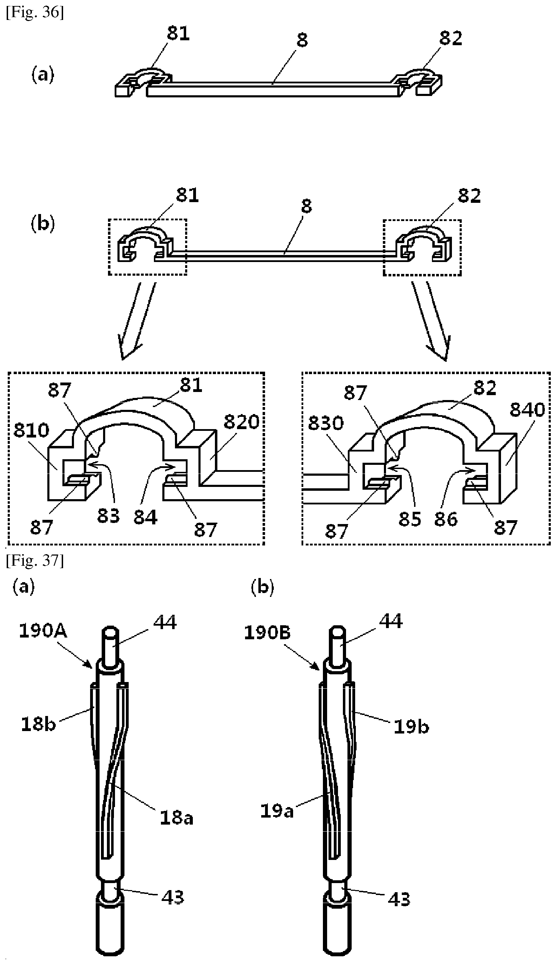

As shown in FIG. 34, a cross bar 8 as shown in FIG. 36(a) is connected and installed between the spiral rod 190A and the spiral rod 190B.

FIG. 36(a) illustrates the cross bar 8 included in the carrier 1800 of FIG. 34. FIG. 36(b) is a partial enlarged view illustrating a state in which connecting portions 81 and 82 of the cross bar 8 of FIG. 36(a) face upward. As shown in FIG. 36(b), one or more spiral line coupling portions 810 and 820 are provided on one side of the cross bar 8, and one or more spiral line coupling portions 830 and 840 are provided at the other side.

A concave portion 83 that is concave leftwards is formed at the spiral line coupling portion 810, and a concave portion 84 that is concave rightwards is formed at the spiral line coupling portion 820.

A concave portion 85 that is concave leftwards is formed at the spiral line coupling portion 830, and a concave portion 86 that is concave rightwards is formed at the spiral line coupling portion 840.

Both side portions 87 of the concave portions 83, 84, 85, and 86 of the spiral line coupling portions 810, 820, 830, and 840 may be convexly formed curved surfaces, as shown in FIG. 36(b). This is because the concave portions 83 and 84 and the concave portions 85 and 86 may more smoothly vertically slide along spiral lines 18b and 18a and spiral lines 19a and 19b.

The spiral line coupling portions 810 and 820 are connected by the connecting portion 81, and, similarly, the spiral line coupling portions 830 and 840 are connected by the connecting portion 82.

Shapes of the spiral line coupling portions 810, 820, 830, and 840 and shapes of the connecting portions 81 and 82 are merely examples, and the present invention is not limited thereto.

The shape of the cross bar 8 is merely an example, and the present invention is not limited thereto.

The spiral rods 190A and 190B having shapes as shown in FIG. 37 are installed at the body 410 of FIG. 34. The spiral rod 190A includes one or more spiral lines 18a and 18b, and, similarly, the spiral rod 190B includes one or more spiral lines 19a and 19b. In the drawing, the spiral rod 190A and the spiral rod 190B each include two spiral lines.

The spiral lines 18a and 18b formed at the spiral rod 190A of FIG. 37(a) and the spiral lines 19a and 19b formed at the spiral rod 190B of FIG. 37(b) protrude at certain heights.

Accordingly, since the spiral line 18b of the spiral rod 190A is inserted in the concave portion 83, the spiral line coupling portion 810 is coupled with the spiral line 18b. Since the spiral line 18a of the spiral rod 190A is inserted in the concave portion 84, the spiral line coupling portion 820 is coupled with the spiral line 18a.

Similarly, since the spiral line 19a of the spiral rod 190B is inserted in the concave portion 85, the spiral line coupling portion 830 is coupled with the spiral line 19a. Since the spiral line 19b of the spiral rod 190B is inserted in the concave portion 86, the spiral line coupling portion 840 is coupled with the spiral line 19b.

Accordingly, as the cross bar 8 is vertically moved, the spiral line coupling portions 810 and 820 and the spiral line coupling portions 830 and 840 slide along the spiral lines 18b and 18a and the spiral lines 19a and 19b, the spiral rod 190A and the spiral rod 190B rotate about longitudinal directions thereof clockwise or counterclockwise by certain angles.

The one or more elastic members 31 and 32 move the cross bar 8 in one direction. In FIG. 34, the one or more elastic members 31 and 32 move the cross bar 8 upward, thereby allowing the cross bar 8 to be on top.

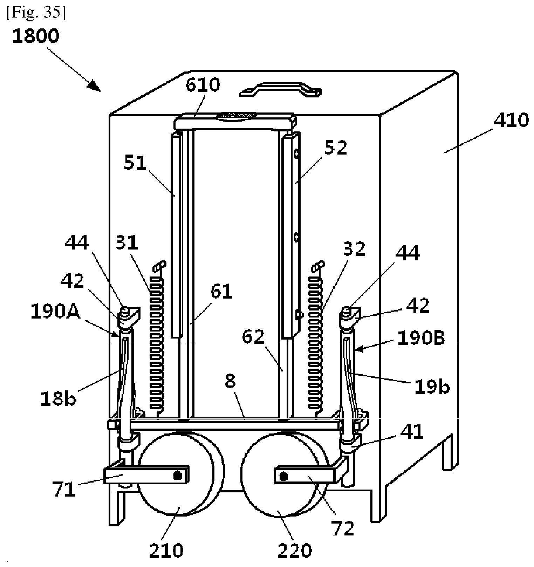

In FIG. 35, as the handle bars 61 and 62 are moved downward by pushing the handle 610 in the carrier 1800 of FIG. 34, since the one or more handle bars 61 and 62 come into contact with the cross bar 8 and push the cross bar 8 downward, the spiral rod 190A rotates about the longitudinal direction thereof counterclockwise by a certain angle, and the spiral rod 190B rotates about the longitudinal direction thereof clockwise by a certain angle, thereby folding the wheels 210 and 220 to the middle of both sides.

When the handle 610 is raised up in the state shown in FIG. 35, as the cross bar 8 moves upward due to the restoring force of the elastic members 31 and 32, the spiral rod 190A rotates on the longitudinal direction thereof clockwise by a certain angle, and the spiral rod 190B rotates about the longitudinal direction thereof counterclockwise by a certain angle, thereby unfolding the wheels 210 and 220 toward front of both sides of the body 410.

Meanwhile, as the guide bar 3 is provided at the cross bar 2 of FIG. 12 and guide bars 5 are provided at the cross bar 4 of FIG. 30, one or more guide bars may be provided at the cross bar 8 of the carrier 1800 of FIG. 35.

Also, as the one or more elastic members 33 and 34 are provided at the pair of spiral rods 130 and 140 of FIG. 12, similarly, the one or more elastic members 33 and 34 may be connected to and installed at the pair of spiral rods 190A and 190B included in the carrier 1800 of FIG. 34.

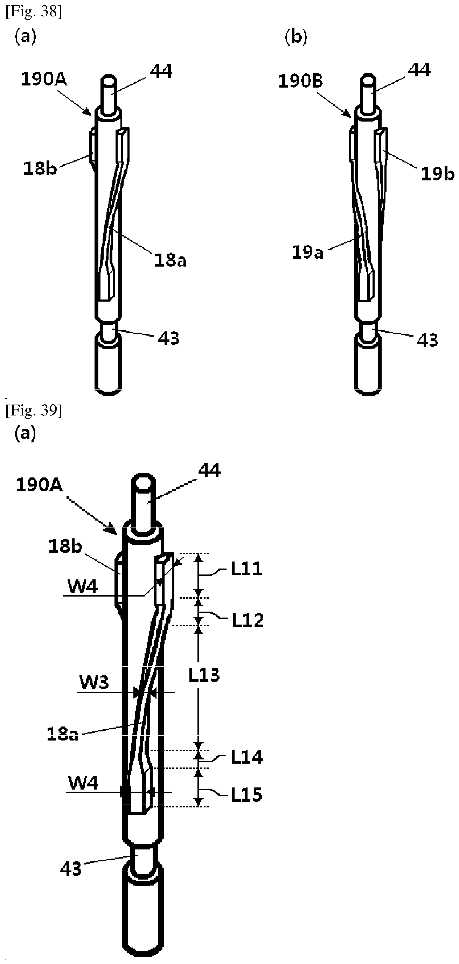

Meanwhile, the spiral rods 190A and 190B of FIGS. 37(a) and 37(b) may have the shapes of the spiral rods 190A and 190B of FIGS. 38(a) and 38(b). In the spiral lines 18a, 18b, 19a, and 19b of the spiral rods 190A and 190B of FIGS. 38(a) and 38(b), like the spiral line 18a of a spiral rod 190 of FIG. 39(a), widths W4 of an upper wide section L11 and a lower wide section L15 are greater than a width W3 of a middle narrow section L13.

Meanwhile, a difference between the width W4 of the upper wide section and the width W3 of the middle narrow section may be from 0.1 to 1 mm but is not limited thereto.

The upper wide section L11 and the lower wide section L15 of the spiral lines 18a, 18b, 19a, and 19b may linearly extend by certain lengths in the longitudinal directions of the spiral rods 190A and 190B but are not limited thereto.

A structure of the spiral rod 190A as shown in FIG. 39(a) may reduce a phenomenon in which the spiral rods 190A and 190B rock unstably left and right when the spiral line coupling portions 810 and 820 and the spiral line coupling portions 830 and 840 provided on both sides of the cross bar 8 are positioned in the upper wide section L11 or the lower wide section L15 of the spiral lines 18b and 18a and the spiral lines 19a and 19b. On the contrary, the spiral line coupling portions 810 and 820 and the spiral line coupling portions 830 and 840 become smoothly vertically slidable in the middle narrow section L13.

The upper wide section L11 and the middle narrow section L13 are connected by an upper connecting section L12. The upper connecting section L12 has a structure with a width which becomes broader from bottom to top.

Similarly, the middle narrow section L13 and the lower wide section L15 are connected by a lower connecting section L14. The lower connecting section L14 has a structure with a width which becomes broader from top to bottom.

Shapes of the spiral rods 190A and 190B of FIG. 37 are merely examples, and the present invention is not limited thereto.

Shapes of the spiral rods 190A and 190B of FIG. 38 are merely examples, and the present invention is not limited thereto.

### «Description of Reference numerals»

- 1, 2, 2', 4, 6, 8:: Cross bars
- 3, 3', 5, 7:: Guide bars
- 10a, 10b, 11a, 11b, 12a, 12b, 13a, 13b, 14a, 14b:: Spiral lines
- 15a, 15b, 16a, 16b, 17a, 17b, 18a, 18b, 19a, 19b:: Spiral lines
- 21, 22, 23a, 23b, 24a, 24b, 27, 28:: Spiral line coupling portions
- 25, 26:: Connecting portions
- 31, 32, 33, 34, 35:: Elastic members
- 36:: Pusher
- 37:: Housing
- 39:: Slot
- 41, 42:: Sleeves
- 46, 47, 48, 49:: Sleeves
- 51, 52, 57, 58:: Guide rails
- 51', 52', 53, 54, 55:: Sleeves
- 61, 62, 63, 64, 67, 68, 69:: Handle bars
- 65, 66:: Handle bar extending portions
- 71, 72, 73, 74:: Wheel supporters
- 81, 82:: Connecting portions
- 83, 84, 85, 86:: Concave portions
- 810, 820, 830, 840:: Spiral line coupling portions
- 92:: Elastic member
- 93, 94:: Cross bars
- 95:: Rope
- 96:: Traction bar
- 97:: Switching shaft
- 99:: Fastening means
- 102, 103, 104, 110, 120 , 130, 140, 130', 140':: Spiral rods
- 150, 160, 170, 180, 190A, 190B:: Spiral rods
- 201, 202, 203:: Castors
- 210, 220:: Wheels
- 310, 320:: Spiral rods
- 330, 340:: Wheels
- 350, 360:: Handle bars
- 370:: Handle
- 400, 410, 420, 430, 440, 450:: Bodies
- 500:: Frame
- 501:: Bracket
- 502:: Sleeve
- 510:: Left supporter
- 511, 512:: Spacers
- 520:: Right supporter
- 521, 522:: Spacers
- 530:: Lower supporter
- 540:: Middle supporter
- 541, 542:: Holders
- 550, 560:: Connecting supporters
- 570:: Upper supporter
- 571, 572:: Holders
- 610, 620, 630, 640:: Handles
- 810, 820, 830, 840:: Spiral line coupling portions
- 900:: Loading plate
- 1000, 1100, 1200, 1300, 1400, 1500, 1600, 1700:: Carriers
- L1:: Upper narrow section
- L2:: Upper connecting section
- L3:: Middle wide section
- L4:: Lower connecting section
- L5:: Lower narrow section
- L11:: Upper wide section
- L12:: Upper connecting section
- L13:: Middle narrow section
- L14:: Lower connecting section
- L15:: Lower wide section

## Claims

1. A device for rotating spiral rods for folding wheels of a carrier, comprising:
a pair of spiral rods each comprising one or more spiral lines;
a cross bar which comprises spiral line coupling portions coupled with the spiral lines and connects the pair of spiral rods to each other; and
one or more elastic members which move the cross bar in one direction.

2. The device of claim 1, wherein the spiral lines are formed as grooves and the spiral line coupling portions are formed as pins in such a way that the spiral line coupling portions are inserted in the corresponding spiral lines.

3. The device of claim 1, wherein the spiral lines are formed protruding and the spiral line coupling portions have concave portions in such a way that the spiral lines are inserted in the corresponding concave portions.

4. The device of claim 1, wherein the wheels are connected to and installed at the pair of spiral rods, respectively.

5. The device of claim 1, further comprising a body, wherein the pair of spiral rods, the cross bar, and the one or more elastic members are installed at the body.

6. The device of claim 5, wherein the body is one of a bag, a suitcase, a trunk, and a golf bag.

7. The device of claim 5, wherein the body and a stacking plate are formed in an L shape overall or the stacking plate is foldable close to the body.

8. The device according to any one of claims 1 and 5, wherein one or more guide bars intersect with the cross bar and extend upward or downward by a certain length.

9. The device of according to any one of claims 1 and 5, further comprising one or more handle bars separated from the cross bar rather than integrated therewith, wherein the one or more handle bars are installed to be vertically slidable.

10. The device of claim 9, wherein when the one or more handle bars are allowed to slide from top to bottom, the one or more handle bars come into contact with the cross bar and push the cross bar downward, and
wherein when the one or more handle bars are slid from bottom to top by a certain distance, the one or more handle bars are separated from the cross bar to become farther from each other.

11. The device of claim 9, wherein a vertical movement distance of the cross bar is shorter than a vertical sliding distance of the one or more handle bars.

12. The device of claim 1, wherein the one or more elastic members move the cross bar upward.

13. The device of claim 1, wherein the one or more elastic members move the cross bar downward.

14. The device according to any one of claims 12 and 13, wherein the one or more elastic members are formed as tension springs, and one side of each of the one or more elastic members is connected to the cross bar and another side thereof is connected to the body.

15. The device according to any one of claims 12 and 13, wherein the one or more elastic members are compression springs.

16. The device of claim 15, wherein the one or more elastic members are positioned in one or more housings installed at the body.

17. The device of claim 1, wherein the one or more elastic members are torsion springs, and one side of each of the one or more torsion springs is connected to the spiral bars and another side thereof is connected to the body.

18. The device according to any one of claims 14 and 15, further comprising one or more torsion springs, wherein one side of each of the one or more torsion springs is connected to the spiral bars and another side thereof is connected to the body.

19. The device of claim 17, wherein the one or more torsion springs are positioned above the pair of spiral rods.

20. The device of claim 18, wherein the one or more torsion springs are positioned above the pair of spiral rods.

21. The device of claim 5, wherein when one or more handle bars and a traction bar are installed at the body, the traction bar and the cross bar are connected by a rope, and the one or more handle bars are allowed to slide downward, the one or more handle bars push the traction bar down in such a way that the rope passes a direction change portion installed at the body and pulls the cross bar upward.

22. The device of claim 2, wherein the spiral lines each comprise an upper narrow section and a middle wide section.

23. The device of claim 21, wherein a difference between a width of the upper narrow section and a width of the middle wide section is 0.1 to 1 mm.

24. The device of claim 3, wherein the spiral lines each comprise an upper wide section and a middle narrow section.

25. The device of claim 23, wherein a difference between a width of the upper wide section and a width of the middle narow section is 0.1 to 1 mm.
